# EUROPÄISCHE PATENTANMELDUNG

(11) **EP 0 903 558 A1**
(43) Veröffentlichungstag der Anmeldung: **24.03.1999**
(21) Anmeldenummer: 98117234.9
(22) Anmeldetag: 11.09.1998
(51) Int. Cl.: G01B 7/14, F15B 15/28, F16F 9/32

(54) **Anordnung eines Näherungssensors an einer Kolben-Zylinder Einheit**

(30) Priorität: 18.09.1997 DE 19740990
(71) Anmelder: Enidine GmbH, 79415 Bad Bellingen-Rheinweiler (DE)
(72) Erfinder: Dräger, Eberhard, 79312 Emmendingen (DE)
(74) Vertreter: Schmitt, Hans, Dipl.-Ing.

(57) **Zusammenfassung**

Eine Kolben-Zylinder-Anordnung, insbesondere ein Stoßdämpfer (1) weist ein Gehäuse (2) sowie einen darin geführten und gegen ein Dämpfungsmedium abgestützten Kolben (3) auf, an dem eine Kolbenstange (5) angreift. Der Stoßdämpfer weist einen Einschraubstopfen (10) auf, innerhalb von dem ein als Näherungssensor ausgebildeten Positionsgeber (19) untergebracht. Der Einschraubstopfen mit dem darin befindlichen Näherungssensor (19) und einer Auswerteelektronik ist koaxial am rückseitigen Ende des Stoßdämpfer-Gehäuses (2) angeordnet. Der Kolben ist rückseitig mit einem Magneten (15) verbunden und der Näherungssensor ist durch wenigstens einen magnetfeldabhängigen Sensor gebildet.

## Beschreibung

Die Erfindung bezieht sich auf eine Kolben-Zylinder-Anordnung, insbesondere einen Stoßdämpfer, mit einem Gehäuse sowie einem darin geführten und gegen ein Dämpfungsmedium abgestützten Kolben, an dem eine Kolbenstange angreift, und mit einer als Einschraubstopfen ausgebildeten Öleinfüll- und Ölablaßschraube, innerhalb der ein als Näherungssensor ausgebildeten Positionsgeber untergebracht ist.

Solche Stoßdämpfer werden beispielsweise in Verbindung mit Positionierantrieben oder Lineareinheiten verwendet, um definierte beziehungsweise festgelegte Positionen, zum Beispiel die Endlage, exakt anfahren zu können. Dabei dient der Näherungssensor zur Überwachung der anzufahrenden Position und erzeugt bei Erreichen dieser Position ein elektrisches Signal, das zur Steuerung, insbesondere zum Abschalten des Positionierantriebs verwendet werden kann.
Bei den vorbekannten Stoßdämpfern sind die Positionsgeber üblicherweise als Aufbau oder Anbau angebracht, was einen erheblichen konstruktiven Aufwand erfordern kann und vor allem den für das Stoßdämpfersystem benötigten Platzbedarf nicht unwesentlich erhöht. Gerade beikleinen Bauformen der Stoßdämfer wirkt sich dies besonders nachteilig aus.

Es besteht daher die Aufgabe, eine Kolben-Zylinder-Anordnung der eingangs erwähnten Art mit Näherungssensor zu schaffen, die einen sehr kompakten Aufbau ermöglicht und die eine hohe Betriebssicherheit aufweist.

Die erfindungsgemäße Lösung dieser Aufgabe besteht bei der Kolben-Zylinder-Anordnung der eingangs erwähnten Art insbesondere darin, daß die als Einschraubstopfen ausgebildete Öleinfüll- und Ölablaßschraube mit dem darin befindlichen Näherungssensor koaxial am rückseitigen Ende des Stoßdämpfer-Gehäuses angeordnet ist, daß der Kolben rückseitig mit einem Magneten verbunden ist und daß der Näherungssensor durch wenigstens einen magnetfeldabhängigen Sensor gebildet ist.
Dadurch lassen sich sehr schlanke Stoßdämpfer mit integriertem Näherungssensor realisieren, die auch noch unter sehr beengten Verhältnissen einsetzbar sind.
Besonders vorteilhaft ist ist es hierbei, wenn in dem Einschraubstopfen außer dem Näherungssensor eine Auswerteelektronik und vorzugsweise elektrische Steckverbinder untergebracht sind und wenn der Einschraubstopfen einen durch eine Trennwand vom Innenraum des Stoßdämpfers abgegrenzten Aufnahmebereich vorzugsweise für eine die Auswerteelektronik und den Näherungssensor tragende Platine hat.
Der Einschraubstopfen mit darin befindlichem Näherungssensor und der Auswerteelektronik bilden dadurch eine Baueinheit, so daß Stoßdämpfer und Sensoreinheit unabhängig voneinander bedarfsweise leicht und schnell ausgetauscht werden können.

Eine Weiterbildung der Erfindung, für die selbständiger Schutz beansprucht wird sieht vor, daß als magnetfeldabhängiger Sensor ein magnetoresistiver Sensor vorgesehen ist.
Ein solcher Sensor weist unter anderem eine hohe Ansprechempfindlichkeit auf, die um den Faktor 10 bis 100 besser ist als bei anderen magnetfeldabhängig arbeitenden Sensoren. Magnetoresistive Sensoren lassen sich auch sehr preisgünstig herstellen, so daß ihr Einsatz bei einem Stoßdämpfer nur unwesentlich den Preis beeinflußt. Besonders vorteilhaft ist es, wenn der magnetoresistive Sensor zur Auswertung der Magnetfeldrichtung angeordnet ist.
Der Sensor arbeitet dadurch unabhängig von der Magnetfeldstärke, so daß sich Änderungen der Magnetkraft, beispielsweise durch Temperatureinfluß, nicht nachteilig auf die vorgesehene Ansprechposition des Kolbens auswirkt.
Gerade bei Verwendung eines magnetoresistiven Sensors in Verbindung mit einem Stoßdämpfer ergeben sich dadurch eine Reihe ganz erheblicher Vorteile. Vor allem läßt sich dadurch der Stoßdämpfer oder dergleichen auch unter rauhen Umgebungsbedingungen einsetzen, ohne daß dabei die Ansprechgenauigkeit der Positionserkennung beeinträchtigt wird.
Bei einem magnetoresistiven Sensor zur Auswertung der Magnetfeldrichtung ist es zweckmäßig, wenn der mit dem Kolben verbundene Magnet axial geführt ist und daß der magnetoresistive Sensor seitlich zur axialen Fluchtrichtung versetzt angeordnet ist.
Dadurch ist eine exakte Zuordnung zwischen dem Sensor und der Führungsbahn des Magneten vorhanden. Je nach Anordnung des Sensors spricht dieser dann an, wenn ihn Feldlinien unter einem bestimmten Winkel durchdringen. Dies ist der Fall, wenn sich der Magnet und der seitlich zur Fluchtrichtung beziehungsweise zur Bewegungsrichtung des Magneten versetzte Sensors in einer dazu passenden Position angenähert haben.

Besonders vorteilhaft ist es, wenn der magnetoresistive Sensor in seiner Lage so auf die vorgesehene Schaltstellung des Magneten eingestellt ist, daß sich die Sensorausgangsspannung etwa bei einem Nulldurchgang befindet beziehungsweise etwa Null ist.
Auch dies trägt mit zu einer exakten Positionierung bei, da in diesem Fall der Schaltpunkt unabhängig von der Amplitude des Ausgangssignales ist. Exemplarstreuungen des Sensors hinsichtlich seiner Ausgangsspannung wirken sich so nicht nachteilig aus.
Vorteilhaft ist dadurch auch, daß die Auswerteelektronik zum Erfassen und zur Auswertung eines Nulldurchgangs der Sensorausgangsspannung sehr einfach ausgebildet sein kann und im wesentlichen nur einen Komparator erfordert.

Nach einer Weiterbildung der Erfindung können auch mehrere magnetoresistive Sensoren zum Erfassen unterschiedliche Positionen des Kolbens und dergleichen innerhalb des Verfahrweges des Kolbens vorgesehen sein.
Dadurch können innerhalb des Verfahrweges des Kolbens beziehungsweise der damit verbundenen Kolbenstange mehrere Schaltpunkte an unterschiedlichen Kolbenpositionen erfaßt werden, beispielsweise die Ein- und Ausfahrendstellungen, bedarfsweise aber auch Zwischenstellungen. Auch besteht dadurch die Möglichkeit, vor einer Endposition ein Vorsignal zu generieren, beispielweise um bei einem Linearantrieb von Schnellgang auf Kriechgang umschalten zu können.

Eine weitere, vorteilhafte Ausgestaltung der Erfindung sieht vor, daß bei mehreren magnetoresistiven Sensoren die Auswerteelektronik eine Einrichtung zum Messen der Laufzeit des Kolbens zwischen den unterschiedlichen Kolbenpositionen aufweist.
Aus einer solchen Messung lassen sich Rückschlüsse auf den Betriebszustand des Stoßdämpfers oder dergleichen ziehen. Insbesondere ist damit eine Überwachung möglich und es lassen sich damit Störungen des Dämpfers, beispielsweise durch Ölverlust oder eine Überwachung der Belastungssituation erkennen.

Zusätzliche Ausgestaltungen der Erfindung sind in den weiteren Unteransprüchen aufgeführt.

Nachstehend ist die Erfindung mit ihren wesentlichen Einzelheiten anhand der Zeichnungen noch näher erläutert.
Es zeigt:
- Fig. 1: eine Längsschnittdarstellung eines Stoßdämpfers,
- Fig. 2: eine Rückseitenansicht des in Fig.1 gezeigten Stoßdämpfers,
- Fig. 3: eine schematische Darstellung eines Stoßdämpfers in Ausfahrstellung mit integrierter Sensor-Einrichtung,
- Fig. 4: eine etwa Fig. 3 entsprechende Darstellung, hier jedoch mit dem Stoßdämpfer in Einfahrstellung und
- Fig. 5: ein Diagramm mit dem Ausgangsspannungsverlauf eines magnetoresistiven Sensors.

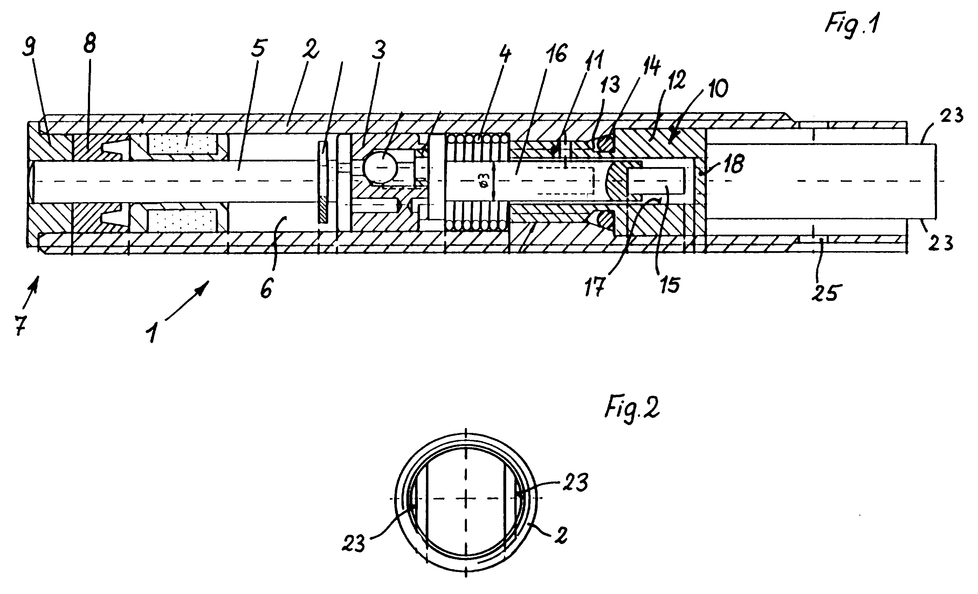

Ein in Fig. 1 gezeigter Stoßdämpfer 1 dient beispielsweise zur Begrenzung des Verfahrweges einer Lineareinheit. Er weist ein Außengehäuse 2 auf, in dem ein Dämpfer-Kolben 3 verschiebbar gelagert ist. In Fig. 1 befindet sich der Kolben in Einfahr-Endstellung. Er wird rückseitig durch eine Druckfeder 4 in Ausfahrrichtung beaufschlagt. Der Stoßdämpfer-Innenraum 6, in dem sich der Kolben 3 bewegt, ist mit Öl gefüllt, um in Verbindung mit Überströmkanälen innerhalb des Kolbens sowie der Druckfeder 4 eine Dämpfungswirkung zu erzielen. Der Kolben 3 ist mit einer Kolbenstange 5 verbunden, über die eine von einem zu dämpfenden Gegenstand einwirkende Kraft auf den Kolben übertragen wird. Der Innenraum 6 ist am vorderen Ende 7 des Stoßdämpfers durch eine Dichtung 8, die sich gegen einen Abschlußring 9 abstützt und am inneren Ende durch einen Einschraubstopfen 10 begrenzt.
Der Einschraubstopfen 10 bildet gleichzeitig auch eine Öleinfüll- und Ölablaßschraube. Der Einschraubstopfen 10 weist an seinem inneren Ende ein Einschraubgewinde 11 auf, an das sich ein Stopfenabschnitt 12 mit etwas vergrößertem Außendurchmesser anschließt. Im Zwischenbereich zwischen Stopfenabschnitt 12 und Einschraubgewinde-Abschnitt ist durch den Absatz ein Einschraub-Anschlag gebildet und neben diesem befindet sich eine Ringut 13 zur Aufnahme eines Dichtringes 14.

Der Stoßdämpfer 1 ist mit einer Einrichtung zur Positionsabfrage des Kolbens bzw. der Kolbenstange ausgerüstet. Dadurch kann bei einer vorgebbaren Position ein elektrisches Signal erzeugt werden, mit dem weitere Funktionen in einer Steuerung aktiviert werden können. Beispielsweise kann bei Erreichen einer vorgegebenen Position und Ansprechen eines Sensors, daß Abschalten eines Linearantriebes erfolgen. Es wird hierbei ein magnetfeldabhängiger Sensor eingesetzt, der von einem mit dem Dämpfer-Kolben 3 verbundenen Magneten 15 aktiviert werden kann.

In Fig. 1 ist gut erkennbar, daß sich dieser Magnet 15 am rückseitigen, freien Ende eines stabförmigen, koaxial verlaufenden Trägerteiles 16 befindet, das mit seinem anderen Ende mit dem Kolben 3 verbunden ist. Das Magnet-Trägerteil 16 taucht mehr oder weniger, je nach Stellung des Kolbens, in eine Innenbohrung 17 des Einschraubstopfens 10, wobei diese Innenbohrung als Sackloch ausgebildet und am hinteren Ende durch eine Trennwand 18 begrenzt ist.

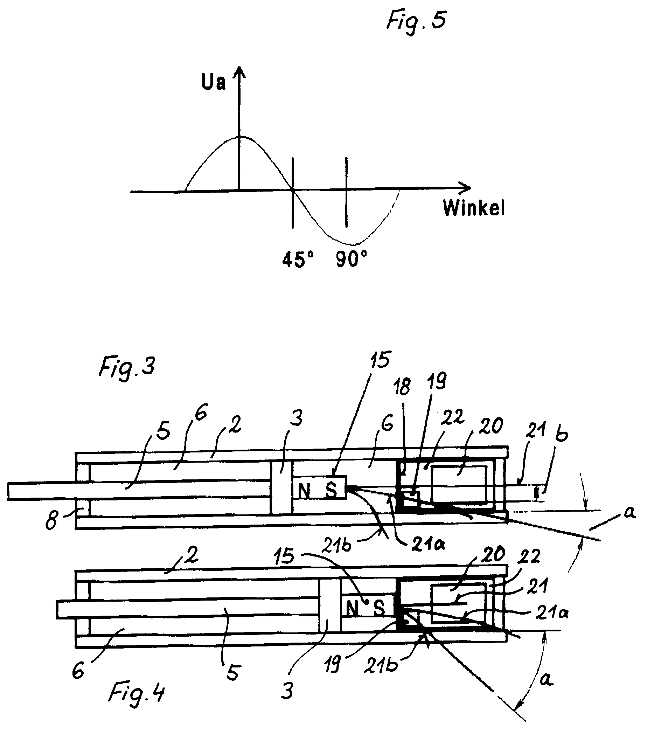

In den Fig. 3 und 4 ist der Stoßdämpfer 1 schematisch dargestellt, wobei Fig.3 eine Ausfahrstellung des Kolbens 3 mit Kolbenstange 5 und Fig. 4 eine Einfahr-Endstellung zeigt. Im rückwärtigen Endbereich und außerhalb des mit Öl gefüllten Innenraumes 6 ist einerseits ein Sensor 19 und daneben eine auf einer Platine befindlichen Auswerteelektronik 20 gezeigt.
Es wird hier bevorzugt ein magnetoresistiver Sensor eingesetzt, der zur Auswertung der Magnetfeldrichtung vorgesehen ist.
Ein solcher, magnetoresistiver Sensor 19 kann so angeordnet werden, daß seine Ausgangsspannung unter einem bestimmten Winkel eines ihn durchdringenden Magnetfeldes einen bestimmten Wert annimmt.
In Fig. 5 ist der Verlauf der Ausgangsspannung über dem Winkel eines den Sensor durchdringenden Magnetfeldes aufgetragen. Dieser Winkel ist auf eine bestimmte Sensorkante bezogen. Im vorliegenden Fall ist der Sensor 19 so relativ zu dem Magneten 15 angeordnet, daß seine Ausgangsspannung Uₐ bei einem Feldliniendurchgang von 0°, 90° sowie Vielfachen davon sein Maximum und jeweils dazwischen bei den Nulldurchgängen bei 45°,135°usw. durch die Abszisse seinen Minimalwert annimmt.
Wie gut in Fig. 3 und 4 erkennbar, ist der magnetoresistive Sensor 19 seitlich zur axialen Fluchtrichtung des Magneten versetzt angeordnet. Der Versatz seitlich zur Mittellinie ist in Figur 3 mit b gekennzeichnet. In Drehrichtung ist er so ausgerichtet, daß beim Durchgang von Feldlinien, die etwa unter 45° aus dem Magneten 15 austreten und den Sensor durchdringen, die Ausgangsspannung des Sensors etwa Null ist.
In den Fig. 3 und 4 sind drei Feldlinien 21, 21a, 21b eingezeichnet. Die Feldlinie 21 läuft in gerader Verlängerung der Längserstreckung des Magneten, während die Feldlinie 21a gegenüber der Feldlinie 21 um einen bestimmten Winkel, beispielsweise 20° versetzt verläuft, und die Feldlinie 21b schließlich läuft etwa unter einem Winkel von 45° zur Längserstreckung des Magneten. In der in Fig. 3 gezeigten Ausfahrstellung des Kolbens 3 mit Kolbenstange 5 wird der Sensor 19 von den etwa unter einem Winkel a von etwa 20° schräg verlaufenden Feldlinien 21a durchdrungen. Wird nun die Kolbenstange 5 eingefahren, so nähert sich auch der Magnet 15 dem Sensor bis schließlich die Feldlinie 21b dazu führt, daß die Ausgangsspannung des Sensors etwa bei Null liegt. Dieser Nulldurchgang ist in Fig. 5 bei der 45°-Markierung erkennbar.
Die Positionierung des Sensors derart, daß seine Ausgangsspannung dann Null ist, wenn sich der Magnet 15 in Schaltstellung, beispielsweise in Einfahrstellung des Kolbens befindet, hat den wesentlichen Vorteil, daß zum Detektieren des Nulldurchganges nur ein geringer elektronischer Aufwand erforderlich ist. Man kommt hierbei praktisch mit einem Komparator für die Auswerteelektronik aus. Dadurch ist nur ein sehr geringer Platzbedarf erforderlich. Die Auswertelektronik 23 sowie der Sensor 19 befinden sich auf einer kleinen Platine 24, die im rückseitigen Bereich des Stoßdämpfer-Außengehäuses 2 eingesetzt ist. Durch das Zuordnen des Schaltpunktes zu einem Nulldurchgang der Sensorausgangsspannung spielt die maximale Amplitude des Sensor keine Rolle, so daß sich dementsprechend auch Exemplarstreuungen nicht negativ auswirken können.

Für die Platine 24 mit der Auswerteelektronik 23 und dem Sensor 19 ist, wie bereits vorerwähnt, am rückseitigen Ende des Stoßdämpferaußengehäuses 2 ein Aufnahmebereich vorgesehen.
Die gesamte Sensor- und Meßeinheit ist in dem Einschraubstopfen 10, der als Öleinfüll- und Ölablaßschraube dient, untergebracht. Rückseitig zu dem Stopfenabschnitt 12 (vgl. Fig. 1) ist der Einschraubstopfen 10 zur Aufnahme der Platine 24 geschlitzt ausgeführt. Die Platine läßt sich hier einführen und wird zusammen mit einer elektrischen Anschlußbuchse am rückseitigen Ende durch Vergießen mit Kunststoff festgelegt. Der Einschraubstopfen 10 bildet so zusammen mit dem Sensor 19 der Auswerteelektronik 23 und einem hier nicht dargestellten Steckverbinder (Anschlußbuchse) eine komplette Baueinheit. Da der Einschraubstopfen 10 lösbar mit dem übrigen Stoßdämpfer verbunden ist, lassen sich die Baueinheiten leicht und schnell voneinander trennen, so daß ein einfaches Austauschen möglich ist.
In Fig. 1 ist gut zu erkennen, daß der Einschraubstopfen mit seinen Einbauteilen koaxial am rückseitigen Endes des Stoßdämpfer-Gehäuses 2 angeordnet ist. Durch diese koaxiale Anordnung ist eine sehr schlanke Bauform des gesamten Stoßdämpfers möglich und somit auch ein Anordnen unter beengten Verhältnissen. Beispielsweise können so Stoßdämpfer realisiert werden, die einen durchgehenden Außendurchmesser von 10 mm aufweisen. Der Einschraubstopfen 10 besteht aus magnetisch nichtleitendem Material, vorzugsweise aus Aluminium, um die Meßempfindlichkeit nicht nachteilig zu beeinflussen und um insbesondere auch den Durchtritt des Magnetfeldes durch die Trennwand 18 nicht zu stark zu bedämpfen.
Der Einschraubstopfen 10 kann noch seitliche Durchtrittsöffnungen 25 aufweisen, die als Sichtöffnungen dienen und über die mittels einer Leuchtdiode auf der Platine, der Schaltzustand optisch angezeigt werden kann.
Der Einschraubstopfen 10 steht mit seinem rückseitigen Ende etwas über das Gehäuse 2 vor und es sind in diesem Bereich Angriffsstellen 23 für ein Drehwerkzeug vorgesehen (Fig.1 und2).
Erwähnt sei noch, daß auch mehrere, auf unterschiedliche Feldrichtungen ansprechende, magnetoresistive Sensoren und/oder mehrere in Längsrichtung zueinander versetzte Sensoren gleicher Ausrichtung vorgesehen sein können. Damit können mehrere Schaltpunkte, d.h. unterschiedliche Stellungen des Kolbens 3 überwacht werden. Es besteht dadurch zusätzlich oder auch in Kombination die Möglichkeit, bei Erweiterung der Auswerteeinrichtung mit einer Meßeinrichtung für die Laufzeit des Kolbens zwischen den unterschiedlichen Kolbenpositionen, die Verfahrgeschwindigkeit zu erfassen, über die Rückschlüsse möglich sind, ob der Stoßdämpfer ordnungsgemäß arbeitet, beispielsweise ob ein Ölverlust aufgetreten ist. Andererseits sind auch Überlastsituationen dadurch registrierbar.

## Patentansprüche

1. Kolben-Zylinder-Anordnung, insbesondere Stoßdämpfer (1) mit einem Gehäuse (2) sowie einem darin geführten und gegen ein Dämpfungsmedium abgestützten Kolben (3), an dem eine Kolbenstange (5) angreift, und mit einer als Einschraubstopfen (10) ausgebildeten Öleinfüll- und Ölablaßschraube, innerhalb der ein als Näherungssensor ausgebildeten Positionsgeber (19) untergebracht ist, **dadurch gekennzeichnet,** daß die als Einschraubstopfen ausgebildete Öleinfüll- und Ölablaßschraube mit dem darin befindlichen Näherungssensor (19) koaxial am rückseitigen Ende des Stoßdämpfer-Gehäuses (2) angeordnet ist, daß der Kolben rückseitig mit einem Magneten (15) verbunden ist und daß der Näherungssensor durch wenigstens einen magnetfeldabhängigen Sensor gebildet ist.

2. Kolben-Zylinder-Anordnung nach Anspruch 1, dadurch gekennzeichnet, daß in dem Einschraubstopfen (10) außer dem Näherungssensor (19) eine Auswerteelektronik (20) und vorzugsweise elektrische Steckverbinder untergebracht sind und daß der Einschraubstopfen einen durch eine Trennwand (18) vom Innenraum des Stoßdämpfers abgegrenzten Aufnahmebereich für eine die Auswerteelektronik und den Näherungssensor tragende Platine hat.

3. Kolben-Zylinder-Anordnung nach Anspruch 1 oder 2, dadurch gekennzeichnet, daß das Stoßdämpfergehäuse eine rückseitige Verlängerung mit einer innenliegenden Einschrauböffnung für den Einschraubstopfen aufweist.

4. Kolben-Zylinder-Anordnung nach einem der Ansprüche 1 bis 3, dadurch gekennzeichnet, daß der Einschraubstopfen bei seinem Aufnahmebereich einen Längsschlitz zur Aufnahme der Platine aufweist und daß die Platine mit dem Einschraubstopfen vorzugsweise mittels insbesondere transparentem Kunststoff vergossen und verbunden ist

5. Kolben-Zylinder-Anordnung nach einem der Ansprüche 1 bis 4, dadurch gekennzeichnet, daß der elektrische Steckverbinder als Anschlußbuchse ausgebildet ist und am äußeren Ende des Einschraubstutzens angeordnet ist und vorzugsweise mit dem Einschraubstopfen beziehungsweise der Platine vergossen ist.

6. Kolben-Zylinder-Anordnung nach einem der Ansprüche 1 bis 5, dadurch gekennzeichnet, daß die Auswerteelektronik zur Ansprechsignalisierung vorzugsweise eine oder mehrere Leuchtdioden aufweist und daß der Einschraubstopfen und/oder die Anschlußbuchse eine oder mehrere, insbesondere mit transparentem Kunststoff gefüllte Sichtöffnungen aufweisen.

7. Kolben-Zylinder-Anordnung insbesondere nach einem der Ansprüche 1 bis 6, dadurch gekennzeichnet, daß als magnetfeldabhängiger Sensor ein magnetoresistiver Sensor vorgesehen ist.

8. Kolben-Zylinder-Anordnung nach Anspruch 7, dadurch gekennzeichnet, daß der magnetoresistive Sensor zur Auswertung der Magnetfeldrichtung angeordnet ist.

9. Kolben-Zylinder-Anordnung nach Anspruch 7 oder 8, dadurch gekennzeichnet, daß der mit dem Kolben verbundene Magnet axial geführt ist und daß der magnetoresistive Sensor seitlich zur axialen Fluchtrichtung versetzt angeordnet ist.

10. Kolben-Zylinder-Anordnung nach einem der Ansprüche 7 bis 9, dadurch gekennzeichnet, daß der magnetoresistive Sensor in seiner Lage so auf die vorgesehene Schaltstellung des Magneten eingestellt ist, daß sich die Sensorausgangsspannung etwa bei einem Nulldurchgang befindet.

11. Kolben-Zylinder-Anordnung nach einem der Ansprüche 7 bis 10, dadurch gekennzeichnet, daß der magnetoresistive Sensor in seiner Lage so auf die vorgesehene Schaltstellung des Magneten eingestellt ist, daß ein Ansprechen des magnetoresistiven Sensors bei einer Magnetfeldrichtung von etwa 45° erfolgt.

12. Kolben-Zylinder-Anordnung nach einem der Ansprüche 7 bis 11, dadurch gekennzeichnet, daß die Auswerteelektronik zum Erfassen und zur Auswertung eines Nulldurchgangs der Sensorausgangsspannung einen Komparator aufweist.

13. Kolben-Zylinder-Anordnung nach einem der Ansprüche 7 bis 12, dadurch gekennzeichnet, daß mehrere auf unterschiedliche Feldrichtungen ansprechende magnetoresistive Sensoren und/oder mehrere in Längsrichtung zueinander versetzte Sensoren gleicher Ausrichtung vorgesehen sind.

14. Kolben-Zylinder-Anordnung nach einem der Ansprüche 7 bis 13, dadurch gekennzeichnet, daß mehrere magnetoresistive Sensoren zum Erfassen unterschiedliche Positionen des Kolbens und dergleichen innerhalb des Verfahrweges des Kolbens vorgesehen sind.

15. Kolben-Zylinder-Anordnung nach Anspruch 14, dadurch gekennzeichnet, daß bei mehreren magnetoresistiven Sensoren die Auswerteelektronik eine Einrichtung zum Messen der Laufzeit des Kolbens zwischen den unterschiedlichen Kolbenpositionen aufweist.

16. Kolben-Zylinder-Anordnung nach Anspruch 14 oder 15, dadurch gekennzeichnet, daß mehrere magnetoresistive Sensoren eine Baueinheit bilden und vorzugsweise auf einem gemeinsamen Chip untergebracht sind.

17. Kolben-Zylinder-Anordnung nach einem der Ansprüche 1 bis 16, dadurch gekennzeichnet, daß der Einschraubstopfen von seinem inneren Ende her eine Innenbohrung zum Eingreifen eines mit dem Kolben verbundenen, stabförmigen Trägerteiles für den Magneten aufweist und daß diese Innenbohrung als Sackloch ausgebildet ist.

18. Kolben-Zylinder-Anordnung nach einem der Ansprüche 1 bis 17, dadurch gekennzeichnet, daß das innere Einschraubende des Einschraubstopfens einen gegenüber dem sich anschließenden Stopfenabschnitt reduzierten Außendurchmesser aufweist und daß im Übergangsbereich ein Einschraubanschlag und vorzugsweise eine Ringnut für einen Dichtring vorgesehen ist.

19. Kolben-Zylinder-Anordnung nach einem der Ansprüche 1 bis 18, dadurch gekennzeichnet, daß der Einschraubstopfen aus magnetisch nichtleitendem Material besteht, vorzugsweise aus Aluminium.
